# EUROPEAN PATENT SPECIFICATION

(11) **EP 0 426 920 B1**
(45) Date of publication and mention of the grant of the patent: **05.04.1995**
(21) Application number: 89311652.5
(22) Date of filing: 10.11.1989
(51) Int. Cl.: F16J 9/22

(54) **Piston for an internal combustion engine**
Kolben für Brennkraftmaschine
Piston pour moteur à combustion interne

(43) Date of publication of application: 15.05.1991
(73) Proprietor: IZUMI INDUSTRIES, LTD., Kawagoe-shi, Saitama-ken (JP)
(72) Inventor: Suzuki, Yoshihiro, Kitaadachi-gun Saitama-ken (JP); Ogiwara, Toshio, Gyoda-shi Saitama-ken (JP); Kudo, Masaaki, Kumagaya-shi Saitama-ken (JP)
(74) Representative: Price, Paul Anthony King

(56) References cited:
- FR-A- 2 284 769
- GB-A- 2 023 765
- US-A- 4 561 889

## Description

The invention relates generally to a piston for an internal combustion engine, and, more particularly, to the portion thereof that defines a piston-ring groove.

In general, the portion defining a piston-ring groove of a piston of an internal combustion engine is not only exposed to a high temperature, but also to mechanical wear due to friction between the piston and a piston ring, whereby blow-by can be caused, and the consumption of lubricant increased. Thus, the life of the engine can be shortened.

In the case of a diesel engine in which abrasion on the piston-ring groove is very severe, the piston may be cast in special cast iron so as to reduce the abrasion. Further, it is disclosed in Japanese Laid Open Patent specification No. 53-31014 how to make aluminium alloy, forming the piston body, penetrate into a porous metal which is embedded around the piston-ring groove, when the piston is cast under high pressure.

Moreover, Japanese Laid Open Patent specifications Nos. 59-21393, 59-218341, and 59-212159, upon which the preamble of claim 1 is based, disclose increasing the wear resistance of the portion defining the piston-ring groove reinforced by porous metal made of Fe, Ni, Cu or the like, in which hard intermetallic compounds of porous metal and aluminium are produced by heat treatment.

The inventors of this application have found firstly that the kind of the porous material influences the process of forming an intermetallic compound of porous material with aluminium, and secondly that cracks are initiated in brittle portions of the formed intermetallic compound when the piston is repeatedly heated for long duration.

If a volumetric ratio V_{f} of the porous metal ring is small, there is no detrimental effect on the piston even if cracks are produced in the intermetallic compound. However, if the volumetric ratio of the porous metal ring increases, the cracks in the intermetallic compound will propagate in the aluminium alloy matrix at the boundary area between the aluminium alloy matrix and the reinforced area with porous metal, resulting in fall-out of the reinforced area from the piston body.

Moreover, there is another problem when the piston-ring groove is reinforced with the porous material. Even if the volume of the intermetallic compound is increased while keeping the volumetric ratio of the porous metal ring small, the wear resistance of the reinforced area is far less than the conventional Ni-resist ring carrier. In order to increase the wear resistance of the area reinforced with the porous metal to an acceptable level for heavy duty diesel engines, the volumetric ratio of the porous metal ring should be more than 20%. However, a reinforced area with such a high porous metal ratio can easily fall out from the piston, as mentioned already.

FR-A-2284769 discloses using copper to increase the strength of the bond between an annular insert and a piston body. 10% or more of Cr is used to ensure that the annular insert has a satisfactory wear resistance.

According to the invention, there is provided a piston for an internal combustion engine, the piston comprising: a pressure-cast aluminium alloy body; and an annular member of porous metal, embedded in the body and having pores into which the aluminium alloy of the body has penetrated to form a composite layer of the porous metal and the aluminium alloy, the annular member defining a piston-ring groove; characterized in that the volumetric ratio of the porous metal is from 10% to 60% and the surface layer of the porous metal comprises at least 10% Cr by weight and has a thickness of at least 0.001mm.

The wear resistance of the portion of the piston defining the piston-ring groove can thus be increased by using porous metal, without relying on an intermetallic compound to provide the increase in wear resistance. Thus, cracking and falling-out of the reinforced area are avoided, so that the method of reinforcing the piston-ring groove with a porous metal ring can be applied without failure for heavy duty engines.

Such a piston for an internal combustion engine can have excellent machinability and wear resistance, can be easy to manufacture and can prolong the life of the engine.

The chromium-containing surface layer suppresses the formation of the brittle intermetallic compound of aluminium and porous metal, thus preventing cracking in the intermetallic compound and increasing the wear resistance of the piston-ring groove. The formation of the brittle intermetallic compound can be suppressed, whether chromium is contained only in the surface layer of the porous metal or is contained uniformly in the porous metal. In order to increase the wear resistance of the reinforced piston-ring groove, it is preferable that the chromium content is more than 15% by weight and that the thickness of the layer containing more than 15% chromium is greater than 0.003 mm.

Whether chrome is contained only in the surface layer of the porous metal, or it is uniformly contained in the whole layer of the porous metal, will scarcely influence the formation of intermetallic compound, but the more chrome that is contained the better the abrasion resistance becomes, and it is preferable that the layer contains more than 15% Cr and is more than 0.003 mm in thickness. The layer may contain 100% Cr.

The volumetric ratio V_{f} of the porous metal (i.e. the percentage of the space in the porous metal which is occupied by the metal) falls between 10% and 60%. When V_{f} is less than 10%, the abrasion resistance is scarcely improved. When V_{f} is more than 60%, it becomes difficult completely to fill the pores of the porous metal with aluminium unless the preheating temperature is raised. However, at a high preheating temperature, an undesirable compound of the porous metal with aluminium may be produced in the surface layer of the composite layer.

The porous metal may be either carbon steel, alloy steel, nickel alloy or Monel metal, and chromium can be diffused in the porous metal through a chromizing process. In other cases, porous metal containing chromium can be produced through powder metallurgy, using for example austenitic stainless steel powders. If desired the chromium layer can be plated on the porous metal.

The invention is diagrammatically illustrated by way of example in the accompanying drawings, in which:-
Figure 1 is a front view, partly broken away and in section, of a piston made of aluminium alloy and to be used in an internal combustion engine;
Figure 2 is a micrograph of a reinforced ring groove area of the piston of Figure 1 with a conventional porous metal of Nickel;
Figure 3 and 4 are photographs of an X-ray micro analysis of the reinforced ring groove area of the piston of Figure 1 with a conventional porous nickel metal ring;
Figures 5 to 7 are photographs of an X-ray micro analysis of the reinforced ring groove area of the piston of Figure 1 when the piston is formed in accordance with the invention;
Figure 8 is a diagram showing the result of abrasion tests of pistons; and
Figure 9 is a diagram showing the thickness of a compound of iron with aluminium.

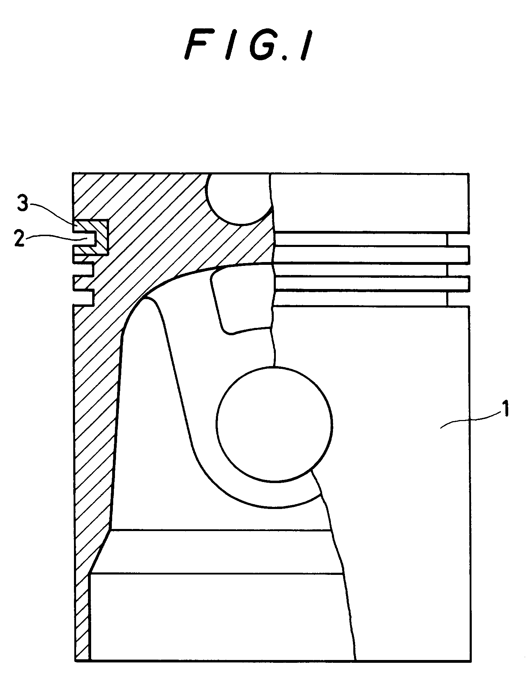

Referring to the drawings and initially to Figure 1, a piston 1 had a top piston-ring groove 2 defined by a composite layer 3 in the form of an annular member, whereby the piston-ring groove 2 was strengthened. The composite layer 3 forming the annular member was made of cellular nickel (manufactured by "Sumitomo-Denko" Co., Ltd. and identified by a registered trademark "Celmet"). The annular member was so formed by press work as to have a volumetric ratio V_{f} of 30% after being made composite with aluminium alloy. Further, another annular member was prepared, on which a cemented chrome layer of about 0.003 mm thickness was formed by means of chromizing.

The two kinds of annular members were positioned in respective moulds. Molten aluminium alloy at 740°C was poured into the respective moulds, and then pressed under the pressure of 800 Kg/cm². Thus, each of the annular members became a composite layer by penetration of aluminium alloy. The piston 1 made thereby received a solid solution treatment at a temperature of 495°C for five hours, and an artificial aging at a temperature of 200°C for five hours. Thereafter specimens were cut out of the piston 1, and their microstructures were observed.

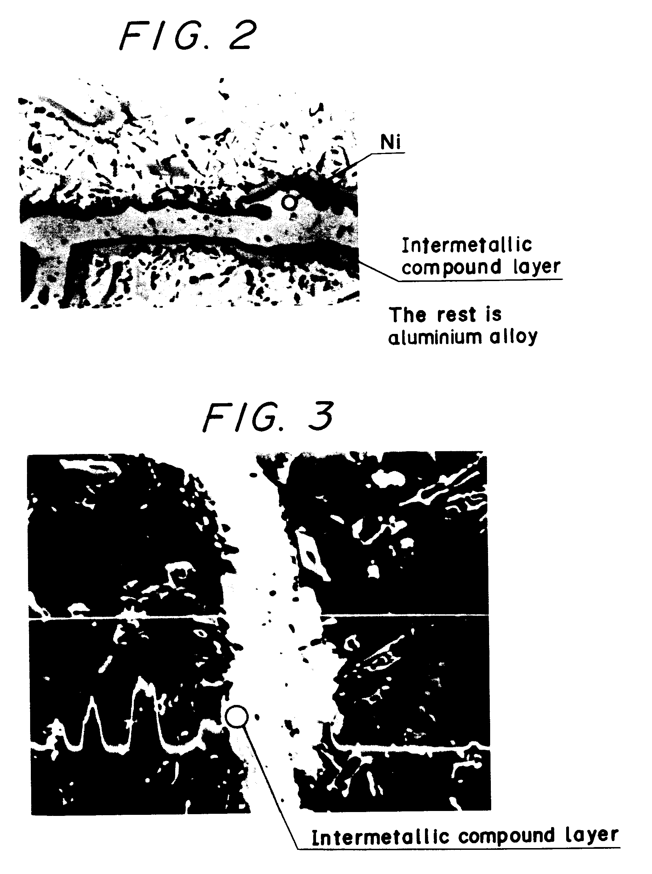

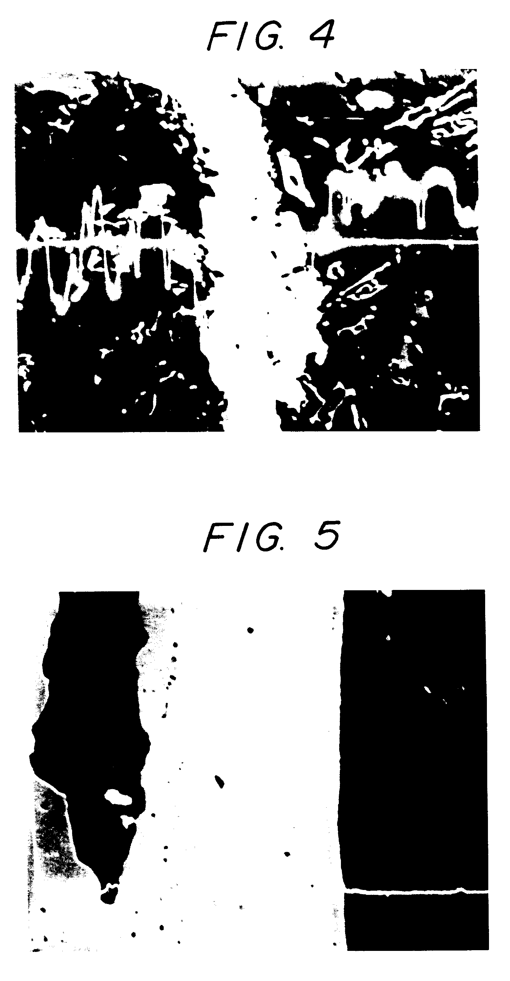

Figure 2 is a micrograph of the composite layer 3, in which a reaction layer of nickel with aluminium has been formed. Figures 3 and 4 show results of quantitative analyses of nickel and aluminium observed with an X-ray microscope. It will be seen from the results that there exists a pure nickel layer at the central part of the composite layer, but there is formed a compound layer of nickel with aluminium at the surface of the composite layer, since the amount of aluminium increases with the approach of the surface of the composite layer.

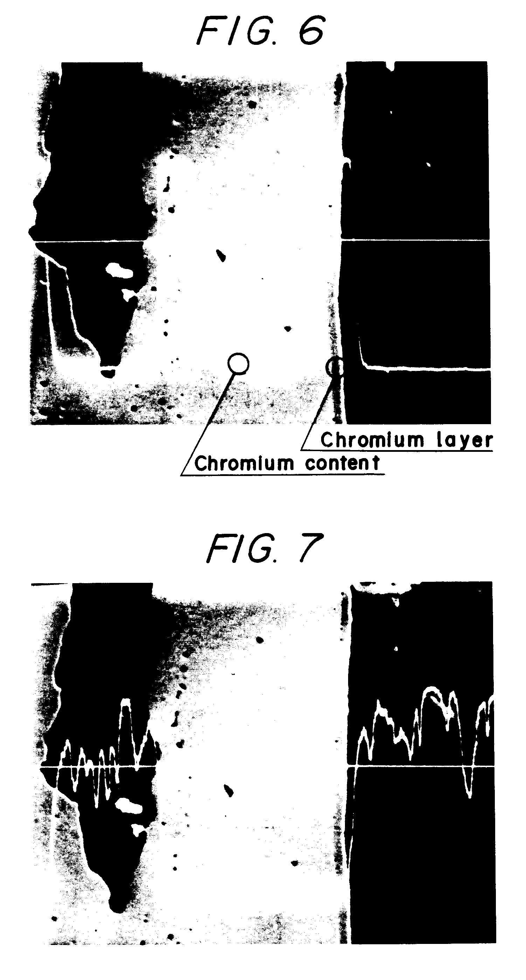

Figures 5 to 7 show results of observing, with an X-ray analyzer, the composite layer comprising the other annular member, at the surface of which the cemented chrome layer of 0.003 to 0.005 mm thickness is formed by means of chromizing. It will be seen from the results that aluminium has not penetrated the inner part of the annular member due to formation of the chrome layer.

When an internal combustion engine is operated for five hundred hours with alternating full-load maximum speed running and non-load running to expose pistons of the engine to cyclic heat loads, cracks are apt to be initiated in an interface layer of the piston body of aluminium alloy, and the composite layer, the volumetric ratio V_{f} of which is more than 20%. In tests described hereinafter, the cyclic heat loads are substituted by alternately heating the piston at a temperature of 500°C, and then suddenly immersing it in water at normal temperature, in order to simplify the tests.

The pistons using the annular members of porous metal (one chromized, and the other not chromized) were compared by the impregnating method, and it was found that the porous metal and the piston body of aluminium alloy were completely separated in their interface which was formed in the piston using the annular member not chromized, whereas there was no crack initiated in the piston using the annular member which had been chromized.

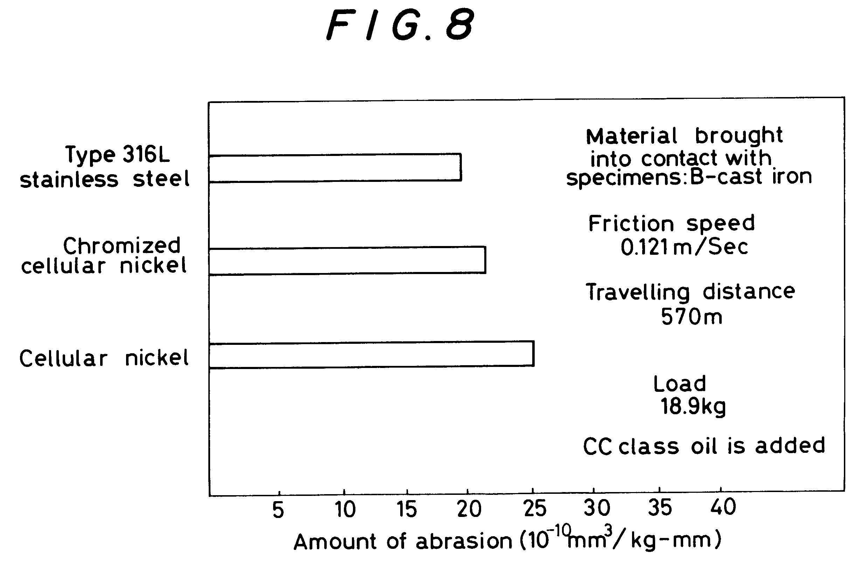

Moreover, the two pistons were tested by an Ogoshi's abrasion testing machine. According to Figure 8 which shows the test results, it was found that the wear resistance of the piston using the annular member which had been chromized was improved.

### Second Embodiment

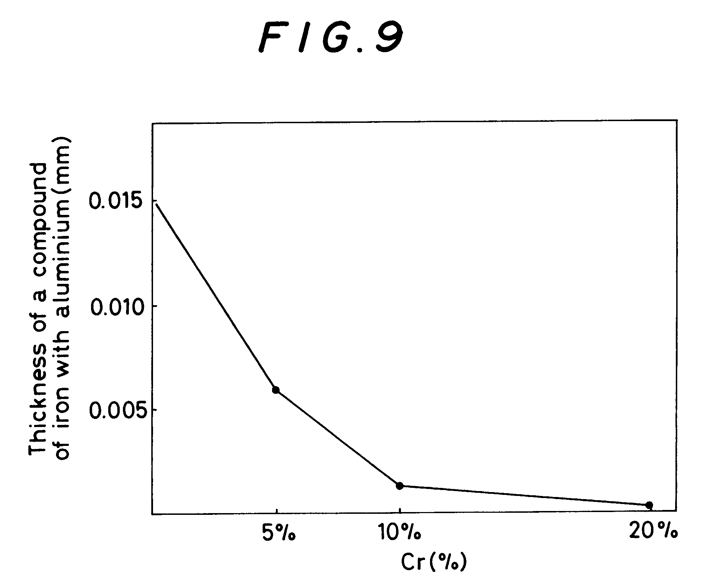

Another embodiment in which the porous metal is formed by sintering will be hereinafter described. Three kinds of mixtures obtained by adding 5%, 10% and 20% Cr to mild steel powder were heated to produce three kinds of sinters, the volumetric ratio V_{f} of which was 50%. Three kinds of composite layers formed by means of pressure casting received a solid solution treatment at a temperature of 495°C for five hours, and an artificial aging at a temperature of 200°C for five hours. Then, the thickness of the compound of iron with aluminium was measured. The relation of the thickness to chrome contents is shown in Figure 9.

After three repetitions of alternating heating to a temperature of 500°C, and sudden immersion in water at normal temperature, it was found that the composite layer and the piston body of aluminium alloy were separated in their interface which was formed in the piston using the sinter which contains the lowest amount of chrome, whereas there was no crack initiated in the piston using the sinter which contained 10% Cr.

### Third Embodiment

An additional abrasion test was made for a composite layer based on a cellular metal of type 316 stainless steel (containing 16 to 18% Cr), the volumetric ratio V_{f} of which was 50%. According to the test result shown in Figure 8, the composite metal of this type had a lower amount of abrasion than that based on the member of cellular nickel, since its volumetric ratio V_{f} was larger.

Moreover, after three repetitions of the alternate heating to a temperature of 500°C, and sudden immersion in water at normal temperature, it was found that there was no crack initiated in the interface of the composite layer and the base portion of the aluminium alloy.

Various modifications are possible within the scope of the appended claims. For example, the porous metal may be plated with chrome, or chrome may be uniformly contained in the porous metal, so long as the amount of the chrome at the surface of the porous metal is more than 10% by weight.

## Claims

1. A piston (1) for an internal combustion engine, the piston comprising:
a pressure-cast aluminium alloy body; and
an annular member of porous metal, embedded in the body and having pores into which the aluminium alloy of the body has penetrated to form a composite layer (3) of the porous metal and the aluminium alloy, the annular member defining a piston-ring groove (2);
characterized in that the volumetric ratio of the porous metal is from 10% to 60% and the surface layer of the porous metal comprises at least 10% Cr by weight and has a thickness of at least 0.001 mm.

2. A piston according to Claim 1, in which the surface layer of the porous metal comprises at least 15% Cr by weight and has a thickness of at least 0.003mm.

3. A piston according to Claim 1 or 2, in which the porous metal comprises nickel or nickel alloy.

4. A piston according to Claim 1 or 2, in which the porous metal comprises carbon steel or alloy steel.

5. A piston according to Claim 1, in which the porous metal comprises a sintered body of mild steel powder and chromium.

## Patentansprüche

1. Kolben (1) für einen Verbrennungsmotor mit
einem durch Preßgießen hergestellten Aluminiumlegierungskörper und
einem Ringteil von porösem Metall, das in den Körper eingebettet ist und Poren besitzt, in welche die Aluminiumlegierung des Körpers unter Bildung einer Verbundschicht (3) des porösen Metalles und der Aluminiumlegierung eingedrungen ist, wobei das Ringteil eine Kolben-Ringnut (2) begrenzt,
**dadurch gekennzeichnet**, daß der Volumenanteil des porösen Metalles 10 bis 60 % beträgt und die Oberflächenschicht des porösen Metalles wenigstens 10 Gew.-% Cr umfaßt und eine Dicke von wenigstens 0,001 mm hat.

2. Kolben nach Anspruch 1, bei dem die Oberflächenschicht des porösen Metalles wenigstens 15 Gew.-% Cr umfaßt und eine Dicke von wenigstens 0,003 mm hat.

3. Kolben nach Anspruch 1 oder 2, bei dem das poröse Metall Nickel oder Nickellegierung umfaßt.

4. Kolben nach Anspruch 1 oder 2, bei dem das poröse Metall Kohlenstoffstahl oder Legierungsstahl umfaßt.

5. Kolben nach Anspruch 1, bei dem das poröse Metall einen gesinterten Körper von Weichstahlpulver und Chrom umfaßt.

## Revendications

1. Piston (1) pour un moteur à combustion interne, le piston comprenant :
- un corps en alliage d'aluminium coulé sous pression ; et
- un élément annulaire en métal poreux, noyé dans le corps et comportant des pores dans lesquels l'alliage d'aluminium du corps a pénétré pour former une couche composite (3) de métal poreux et d'alliage d'aluminium, l'élément annulaire définissant une gorge (2) pour un segment ;
caractérisé en ce que le rapport volumétrique du métal poreux est compris entre 10% et 60%, et la couche de surface du métal poreux comprend au moins 10% en poids de Cr et a une épaisseur d'au moins 0,001 mm.

2. Piston selon la revendication 1, dans lequel la couche de surface du métal poreux comprend au moins 15% en poids de chrome et a une épaisseur d'au moins 0,003 mm.

3. Piston selon l'une ou l'autre des revendications 1 et 2, dans lequel le métal poreux comprend du nickel ou un alliage de nickel.

4. Piston selon l'une ou l'autre des revendications 1 et 2, dans lequel le métal poreux comprend un acier au carbone ou un acier allié.

5. Piston selon la revendication 1, dans lequel le métal poreux comprend un corps fritté de poudre d'acier doux et de chrome.
